# EUROPÄISCHE PATENTSCHRIFT

(11) **EP 1 426 582 B1**
(45) Veröffentlichungstag und Bekanntmachung des Hinweises auf die Patenterteilung: **07.12.2005**
(21) Anmeldenummer: 03025841.2
(22) Anmeldetag: 11.11.2003
(51) Int. Cl.: F02B 47/08, F01N 3/02, F01N 3/08, F02M 25/07

(54) **Verfahren zum Betreiben einer direkteinspritzenden Brennkraftmaschine**
Method to operate an internal combustion engine with direct injection
Méthode pour contrôler un moteur à combustion interne à injection directe

(30) Priorität: 22.11.2002 DE 10254625
(43) Veröffentlichungstag der Anmeldung: 09.06.2004
(73) Patentinhaber: Volkswagen Aktiengesellschaft, 38436 Wolfsburg (DE)
(72) Erfinder: Ebus, Feitse, 38446 Wolfsburg (DE); Stiebels, Bernd, Dr., 38528 Adenbüttel (DE); Spiegel, Leo, Dr., 71665 Vaihingen (DE)

(56) Entgegenhaltungen:
- EP-A- 0 346 803
- DE-A- 19 853 119
- US-A- 5 671 600
- US-B1- 6 427 436

## Beschreibung

Die Erfindung betrifft ein Verfahren zum Betreiben einer direkteinspritzenden Brennkraftmaschine, insbesondere direkteinspritzender Ottomotor, insbesondere eines Kraftfahrzeuges, wobei eine vorbestimmte Abgasmenge aus einem Abgas in die Ansaugluft zurück geführt wird, gemäß dem Oberbegriff des Anspruchs 1.

Moderne Ottomotoren mit Direkteinspritzung ziehen ihren Hauptvorteil im Kraftstoffverbrauch aus dem sogenannten Schichtladebetrieb, bei dem durch späte Einspritzung in den Verdichtungshub an der Zündkerze ein brennbares Gemisch erzeugt wird. Im restlichen Brennraum liegt nahezu reine Luft vor, so daß sehr hohe, verbrauchsgünstige Luftverhältnisse von λ = 1,5 bis 4 gefahren werden können. Bei höheren Lasten und Drehzahlen wird die Darstellung des Schichtladebetriebs aufgrund der größeren Kraftstoffmenge bzw. kürzer werdenden Zeit für die Gemischaufbereitung immer schwieriger. Um dennoch in diesem Last/Drehzahlbereich Verbrauchsvorteile erzielen zu können, wird der sogenannte homogene Magerbetrieb eingesetzt. Bei dieser Betriebsart wird in den Saughub eingespritzt, so daß zum Zündzeitpunkt ein homogenes Gemisch vorliegt. Das Luftverhältnis dieses mageren Kraftstoff-Luft-Gemisches wird im Gegensatz zum homogenen Betrieb mit λ = 1 bei konventionellen Motoren in der Regel zwischen λ = 1,3 bis 1,6 eingestellt. Hierdurch ergeben sich Verbrauchsvorteile von ca. 7% bis 12% bezogen auf den Betrieb mit λ = 1.

Aus der DE 198 37 852 A1 ist ein Kraftstoffsteuerverfahren und System für einen Verbrennungsmotor vom Zylindereinspritztyp bekannt, der in einem als Ansaughub-Einspritzmodus bezeichneten Modus betrieben wird, in dem die Kraftstoffeinspritzung während eines Ansaughubes des Motors zum Realisieren eines niedrigen Luft/Kraftstoffverhältnisses durchgeführt wird. Zusätzlich ist ein EGR-Regelsystem vorgesehen. In dem Ansaughub-Einspritzmodus erfolgt eine Abgasrückführung mit einer vorbestimmten EGR-Menge.

Der Erfindung liegt die Aufgabe zugrunde, ein Verfahren der obengenannten Art zur Verfügung zu stellen, wobei NOx-Emissionen im Homogen-Magerbetrieb der direkteinspritzenden Brennkraftmaschine reduziert sind.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß bei einem Betrieb der Brennkraftmaschine bei hoher Last und Drehzahl im Homogen-Magerbetrieb eine vorbestimmte Abgasmenge aus dem Abgas zurückgeführt, das Abgas gekühlt und einem NOx-Speicherkatalysator zugeführt wird.

Dies hat den Vorteil, daß trotz im Vergleich zu einem Schichtladebetrieb verringertem Kraftstoff-zu-Luft-Verhältnis λ eine NOx-Emission reduziert wird, wodurch der NOx-Speicherkatalysator im Hochlastbereich weniger belastet wird, so daß verbrauchsungünstige Betriebsphasen der Brennkraftmaschine mit Regeneration des NOx-Speicherkatalysators reduziert werden, was zu einer Verringerung des Verbauchs der Brennkraftmaschine führt.

Um den NOx-Speicherkatalysator zu regenerieren wird bei gesättigtem NOx-Speicherkatalysator die Brennkraftmaschine in einem Fettbetrieb mit λ<<1 betrieben.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine graphische Darstellung des Einflusses des λ-Wertes auf einen Kraftstoffverbrauch bezogen auf λ = 1,0 und
- Fig. 2: eine graphische Darstellung des Einflusses des λ-Wertes auf eine NOx-Emission bezogen auf λ = 1,0.

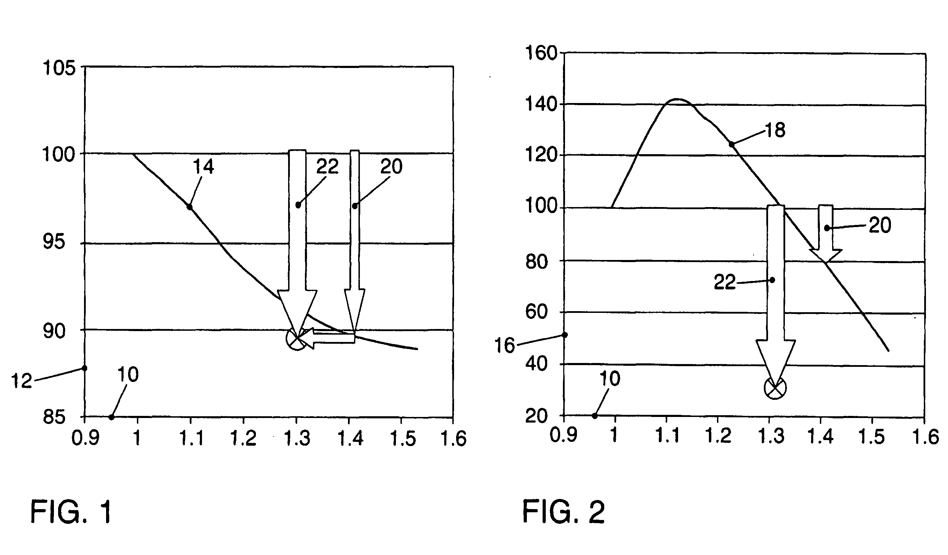

Fig. 1 veranschaulicht graphisch einen Einfluß des auf einer horizontalen Achse 10 aufgetragenen λ-Wertes auf einen auf einer vertikalen Achse 12 aufgetragenen Kraftstoffverbrauch bezogen auf λ = 1,0. Eine Linie 14 stellt eine Abhängigkeit des Kraftstoffverbrauchs vom λ-Wert bei herkömmlicher Betriebsweise der Brennkraftmaschine dar.

Fig. 2 veranschaulicht graphisch einen Einfluß des auf einer horizontalen Achse 10 aufgetragenen λ-Wertes auf eine auf einer vertikalen Achse 16 aufgetragene NOx-Emission bezogen auf λ = 1,0. Eine Linie 18 stellt eine Abhängigkeit der NOx-Emission vom λ-Wert bei herkömmlicher Betriebsweise der Brennkraftmaschine dar.

In Fig. 1 und 2 markiert ein Pfeil 20 einen Betriebspunkt bei λ = 1,4 im Homogen-Magerbetrieb, wie er bei herkömmlicher Betriebsweise gewählt wird. An diesem Betriebspunkt liegt der Verbrauch 11% unter demjenigen bei λ = 1,0. Die NOx-Emission liegt an diesem Betriebspunkt ebenfalls 11 % unterhalb derjenigen bei λ = 1,0.

Erfindungsgemäß ist vorgesehen, im Homogen-Magerbetrieb eine Abgasrückführung durchzuführen. Hierdurch kann ein in Fig. 1 und 2 mit Pfeil 22 markierter Betriebspunkt bei λ = 1,3 angefahren werden. Dieser Betriebspunkt entspricht einem Homogen-Magerbetrieb mit 15% Abgasrückführung. Wie sich unmittelbar anschaulich aus den Fig. 1 und 2 ergibt, liegt der Kraftstoffverbrauch 11% unter demjenigen bei λ = 1,0 und die NOx-Emission 70% niedriger als bei λ = 1,0.

Um in diesem Betriebsbereich zusätzlich eine hoher Speicherkapazität des NOx-Speicherkatalysators zu gewährleisten, wird erfindungsgemäß das Abgas während des Homogen-Magerbetriebs gekühlt, bevor es dem NOx-Speicherkatalysator zugeführt wird.

Wie aus Fig. 2 ersichtlich, entstehen im konventionellen Betrieb der Brennkraftmaschine im Homogen-Magerbetrieb bei λ = 1,3 bis 1,6 aufgrund des Sauerstoffüberschusses hohe NOx-Emissionen, die mit konventionellen 3-Wege-Katalysatoren aufgrund der Abweichung vom Betrieb mit λ = 1,0 nicht reduziert werden können. Eine weitere Anhebung des Luftverhältnisses und damit weitere Absenkung der NOx-Emissionen gemäß Linie 18 ist aufgrund von Laufruheproblemen des Motors nicht möglich. Daher ist ein NOx-Speicherkatalysator vorgesehen, der im Magerbetrieb NOx einspeichert und in kurzen Fettphasen mit λ << 1 durch Reduktion regeneriert wird. Aufgrund des hohen NOx-Rohmassenstroms im homogenen Magerbetrieb wird die Speicherkapazität dieses Katalysators jedoch schnell überschritten, so daß durch die häufig erforderlichen Fettphasen zur Regenerierung des Katalysators der Verbrauchsvorteil dieser Betriebsart deutlich geschmälert wird.

Erfindungsgemäß ist nunmehr die Kombination des Homogen-Magerbetrieb mit Abgasrückführung und einer Zuführung des Abgases an einen Speicherkatalysator nach Abgaskühlung vorgesehen. Wie aus der obigen Erläuterung der Fig. 1 und 2 hervor geht, ist es durch die Zugabe von externer Abgasrückführung möglich, unter Beibehaltung des Verbrauchsvorteils den NOx-Rohmassenstrom deutlich zu reduzieren. Dies hat zur Konsequenz, daß die Speicherplätze des NOx-Speicherkatalysators deutlich langsamer gefüllt werden und die verbrauchsungünstigen Fettphasen zur Regeneration des NOx-Speicherkatalysators deutlich reduziert werden. Die hohen Temperaturen, welche im Betrieb der Brennkraftmaschine bei hohen Lasten und Drehzahlen im Homogen-Magerbetrieb auftreten, werden durch die Abgaskühlung vom NOx-Speicherkatalysator ferngehalten, so daß die Abgastemperaturen im Arbeitsfenster des NOx-Speicherkatalysators bleiben und das volle Verbrauchspotential dieser Betriebsart auch für den Homogen-Magerbetrieb bei hoher Last und Drehzahl zur Verfügung steht.

## Patentansprüche

1. Verfahren zum Betreiben einer direkteinspritzenden Brennkraftmaschine, insbesondere direkteinspritzender Ottomotor, insbesondere eines Kraftfahrzeuges, wobei eine vorbestimmte Abgasmenge aus einem Abgas in die Ansaugluft zurück geführt wird, **dadurch gekennzeichnet, daß** bei einem Betrieb der Brennkraftmaschine bei hoher Last und Drehzahl im Homogen-Magerbetrieb eine vorbestimmte Abgasmenge aus dem Abgas zurückgeführt, das Abgas gekühlt und einem NOx-Speicherkatalysator zugeführt wird.

2. Verfahren nach Anspruch 1, **dadurch gekennzeichnet, daß** bei gesättigtem NOx-Speicherkatalysator die Brennkraftmaschine in einem Fettbetrieb mit λ<<1 betrieben wird.

3. Verfahren nach Anspruch 1, **dadurch gekennzeichnet, daß** 10% bis 20%, insbesondere 15%, des Abgases zurückgeführt wird.

4. Verfahren nach wenigstens einem der vorhergehenden Ansprüche, **dadurch gekennzeichnet, daß** die Abgasrückführung als eine externe Abgasrückführung ausgeführt wird.

## Claims

1. Method for operating a direct injection internal combustion engine, in particular a direct injection spark ignition engine, in particular of a motor vehicle, in which a predetermined exhaust gas quantity is recirculated from an exhaust gas into the intake air, **characterized in that**, when the internal combustion engine is operating at high load and at a high engine speed in homogeneous lean-burn mode, a predetermined exhaust gas quantity is recirculated from the exhaust gas, the exhaust gas is cooled and fed to an NOx storage catalytic converter.

2. Method according to Claim 1, **characterized in that**, when the NOx storage catalytic converter is saturated, the internal combustion engine is operated in a rich-burn mode with λ<<1.

3. Method according to Claim 1, **characterized in that** from 10% to 20%, in particular 15%, of the exhaust gas is recirculated.

4. Method according to at least one of the preceding claims, **characterized in that** the exhaust gas recirculation is designed as external exhaust gas recirculation.

## Revendications

1. Procédé pour le fonctionnement d'un moteur à combustion interne à injection directe, en particulier un moteur à allumage commandé à injection directe, en particulier d'un véhicule automobile, dans lequel une quantité prédéterminée de gaz d'échappement est ramenée des gaz d'échappement vers l'air' d'admission, **caractérisé en ce que**, lors d'un fonctionnement à hautes charges et à hauts régimes du moteur à combustion interne en mode pauvre homogène, une quantité prédéterminée de gaz d'échappement est recyclée, les gaz d'échappement sont refroidis et amenés à un catalyseur à accumulation de NOx.

2. Procédé selon la revendication 1, **caractérisé en ce qu'**en cas de saturation du catalyseur à accumulation de NOx, le moteur à combustion interne fonctionne en mode riche avec λ << 1.

3. Procédé selon la revendication 1, **caractérisé en ce que** 10% à 20%, en particulier 15%, des gaz d'échappement sont recyclés.

4. Procédé suivant au moins l'une quelconque des revendications précédentes, **caractérisé en ce que** le recyclage des gaz d'échappement est réalisé sous forme d'un recyclage des gaz d'échappement externe.
